# EUROPEAN PATENT APPLICATION

(11) **EP 4 397 706 A1**
(43) Date of publication of application: **10.07.2024**
(21) Application number: 22864249.2
(22) Date of filing: 17.08.2022
(51) Int. Cl.: C08L 21/00, B60C 1/00, C08L 57/00

(54) **RUBBER COMPOSITION, PRODUCTION METHOD THEREFOR, AND TIRE PRODUCT**

(30) Priority: 30.08.2021 JP 2021140492
(71) Applicant: ENEOS Corporation, Chiyoda-ku Tokyo 100-8162 (JP)
(72) Inventor: AKIYAMA Yoichi, Tokyo 100-8162 (JP); CHINO Keisuke, Tokyo 100-8162 (JP); ASHIURA Makoto, Tokyo 100-8162 (JP); UEDA Naho, Tokyo 100-8162 (JP); UCHIZAWA Shotaro, Tokyo 100-8162 (JP); MATSUO Yusuke, Tokyo 100-8162 (JP)
(74) Representative: Müller-Boré & Partner Patentanwälte PartG mbB
(86) International application number: PCT/JP2022/031006
(87) International publication number: WO 2023/032664

(57) **Abstract**

A rubber composition that can improve the abrasion resistance of a tire is provided. The rubber composition includes: a rubber component having a glass transformation temperature of -60°C or more; and an additive for rubber, including a sulfur-containing hydrocarbon polymer. In the rubber composition, the sulfur-containing hydrocarbon polymer is a reaction product of sulfur and a polymer of an unsaturated hydrocarbon, and the unsaturated hydrocarbon includes an alicyclic unsaturated compound, and the sulfur-containing hydrocarbon polymer has a weight-average molecular weight of 500 or more and 4000 or less.

## Description

### BACKGROUND OF THE INVENTION

### Technical Field

The present invention relates to a rubber composition and a method of producing the rubber composition. Also, the present invention relates to a tire product produced using the rubber composition.

### Background Art

Conventionally, tires have been produced from rubber compositions including vulcanizing agents that function for vulcanization, fillers such as carbon black and silica, anti-aging agents that suppress quality deterioration, and waxes, and each component has been improved.

In recent years, tires have required various performances such as wet grip performance and abrasion resistance. For example, a rubber composition of which the dynamic elastic modulus E* reversibly varies due to water and which satisfies a specific expression (dynamic elastic modulus E* in water wetting/dynamic elastic modulus E* in drying × 100% ≤ 90%) is proposed in order to improve the total performance of the wet grip performance and dry grip performance of a tire (see Patent Literature 1). However, the abrasion resistance of the tire has not been sufficiently examined in the invention described in Patent Literature 1.

The abrasion resistance of a tire tends to deteriorate in the case of using a rubber component having a high glass transformation temperature or blending an additive that increases the glass transformation temperature of a rubber component such as a petroleum resin, in a rubber composition for a tire for the purpose of improving wet grip performance. Therefore, a rubber composition for a tire, which improves the abrasion resistance of a tire even in the case of using a rubber component having a high glass transformation temperature, is demanded.

### Patent Literature

[Patent Literature 1] International Publication No. WO 2020/022326

### SUMMARY OF THE INVENTION

### Technical Problem

Thus, as a result of intensive examination for solving the problems described above, the present inventors surprisingly found that a tire produced using a rubber composition obtained by blending a rubber component having a high glass transformation temperature with an additive for rubber, including a specific sulfur-containing hydrocarbon polymer, has improved abrasion resistance rather than deteriorated abrasion resistance. The present inventors accomplished the present invention on the basis of such findings.

In other words, in accordance with the present invention, the following invention is provided.
[1] A rubber composition including:
   a rubber component having a glass transformation temperature of -60°C or more; and
   an additive for rubber, including a sulfur-containing hydrocarbon polymer, wherein
   the sulfur-containing hydrocarbon polymer is a reaction product of sulfur and a polymer of an unsaturated hydrocarbon, and the unsaturated hydrocarbon includes an alicyclic unsaturated compound, and
   the sulfur-containing hydrocarbon polymer has a weight-average molecular weight of 500 or more and 4000 or less.
[2] The rubber composition according to [1], wherein the alicyclic unsaturated hydrocarbon includes a compound including a norbornene skeleton.
[3] The rubber composition according to [2], wherein the compound including the norbornene skeleton includes dicyclopentadiene.
[4] The rubber composition according to [2] or [3], wherein the rubber composition is formed by reaction of an unsaturated bond in the norbornene skeleton with sulfur.
[5] The rubber composition according to any of [1] to [4], wherein the rubber component has a glass transformation temperature of -50°C or more and -10°C or less.
[6] The rubber composition according to any of [1] to [5], wherein the sulfur-containing hydrocarbon polymer has a weight-average molecular weight of 700 or more and 2000 or less.
[7] The rubber composition according to any of [1] to [6], wherein the rubber component is at least one selected from a group consisting of aromatic vinyl-conjugated diene copolymer rubbers and conjugated diene (co)polymer rubbers.
[8] The rubber composition according to any of [1] to [7], wherein the rubber component includes at least one selected from a group consisting of styrene-butadiene rubber, butadiene rubber, natural rubber, and isoprene rubber.
[9] The rubber composition according to any of [1] to [8], further including a filler.
[10] The rubber composition according to [9], wherein the filler includes at least one selected from a group consisting of silica and carbon black.
[11] The rubber composition according to [9], wherein a content of the filler is 10 parts by mass or more and less than 200 parts by mass with respect to 100 parts by mass of the rubber component.
[12] The rubber composition according to any of [1] to [11], wherein the additive for rubber is an agent for improving abrasion resistance of a tire.
[13] The rubber composition according to any of [1] to [12], for use in a tire product.
[14] A method of producing a rubber composition, including a step of kneading at least a rubber component and an additive for rubber, wherein
   the rubber component has a glass transformation temperature of - 60°C or more,
   the additive for rubber includes a sulfur-containing hydrocarbon polymer,
   the sulfur-containing hydrocarbon polymer is a reaction product of sulfur and a polymer of an unsaturated hydrocarbon, and the unsaturated hydrocarbon includes an alicyclic unsaturated compound, and
   the sulfur-containing hydrocarbon polymer has a weight-average molecular weight of 500 or more and 4000 or less.
[15] A tire product produced using the rubber composition according to any of [1] to [13].

### Advantageous Effects of Invention

In accordance with the present invention, a rubber composition for producing a tire excellent in abrasion resistance can be provided. In addition, in accordance with the present invention, a tire with excellent in wet grip property and handling stability can be produced.

### DETAILED DESCRIPTION OF THE INVENTION

### [Rubber Composition]

A rubber composition of the present invention includes a rubber component and an additive for rubber, and may further include a filler. A tire produced using the rubber composition of the present invention is excellent in abrasion resistance, wet grip property, and handling stability. The content of the rubber component is preferably 20% by mass or more and 80% by mass or less, more preferably 25% by mass or more and 75% by mass or less, and still more preferably 30% by mass or more and 70% by mass or less with respect to the total solid mass of the rubber composition. The content of the additive for rubber is preferably 1 part by mass or more and 30 parts by mass or less, more preferably 3 parts by mass or more and 25 parts by mass or less, and still more preferably 5 parts by mass or more and 20 parts by mass or less with respect to 100 parts by mass of the rubber component. The content of the filler is preferably 10 parts by mass or more and less than 200 parts by mass, more preferably 15 parts by mass or more and 180 parts by mass or less, still more preferably 20 parts by mass or more and 160 parts by mass or less, even more preferably 30 parts by mass or more and 130 parts by mass or less, and particularly preferably 40 parts by mass or more and 110 parts by mass or less with respect to 100 parts by mass of the rubber component.

### (Rubber Component)

The rubber component used in the rubber composition has a glass transformation temperature (Tg) of -60°C or more, preferably -55°C or more, and more preferably -50°C or more, and preferably -10°C or less, more preferably -15°C or less, and still more preferably -20°C or less. In particular, the glass transformation temperature (Tg) of the rubber component is preferably -55°C or more and -10°C or less, more preferably -50°C or more and -10°C or less, still more preferably -50°C or more and -15°C or less, and even more preferably -50°C or more and -20°C or less. A tire using the rubber component of which the glass transformation temperature (Tg) is within the numerical range described above has a favorable rolling resistance characteristic and excellent wet grip performance and is excellent in abrasion resistance, and is therefore preferred. In particular, a tire using the rubber component of which the glass transformation temperature (Tg) is within the numerical range described above and containing, as the filler, silica in a preferable amount described in detail below (10 parts by mass or more and less than 200 parts by mass with respect to 100 parts by mass of the rubber component) is preferred as an HPT (high-performance tire), a fuel-efficient tire, or an all-season tire.

In the case of using two or more rubbers as the rubber components, Tg of the mixed rubber component is preferably within the range described above.

Tg of the rubber component can be measured by a conventionally known method. For example, Tg of the rubber component can be measured by differential thermal analysis (DTA) or differential scanning calorimetric measurement (DSC).

The rubber component is not particularly limited as long as the rubber component satisfies Tg described above. However, the rubber component preferably includes a diene rubber. The following sulfur-containing hydrocarbon polymer has higher reactivity with the diene rubber and more easily reacts with a rubber molecular chain than an unsaturated petroleum resin (containing no sulfur) which is a common unsaturated hydrocarbon polymer.

At least one of aromatic vinyl-conjugated diene copolymer rubbers and conjugated diene (co)polymer rubbers is preferably used as the diene rubber. Examples of the aromatic vinyl-conjugated diene copolymer rubber include styrene-butadiene rubber (SBR), styrene-isoprene-butadiene rubber, styrene-isoprene rubber, and styrene-α-methylstyrene-butadiene rubber. Examples of the conjugated diene (co)polymer rubber include butadiene rubber (BR), natural rubber (NR), and isoprene rubber (IR). Examples of diene rubbers other than them include nitrile rubber (NBR), chloroprene rubber (CR), ethylene-propylene-diene terpolymer rubber (EPDM), butyl rubber (IIR), and the like, and modified diene rubbers thereof. The modified diene rubbers encompass diene rubbers formed by modified techniques such as main-chain modification, single-end modification, double-end modification, and hydrogenation. Examples of the modified functional groups of modified synthetic diene rubbers include various functional groups such as epoxy, amino, alkoxysilyl, and hydroxyl groups, and one or two or more of these functional groups may be included in such a modified synthetic diene rubber. Of these, at least one selected from the group consisting of styrene-butadiene rubber, butadiene rubber, natural rubber, and isoprene rubber is preferably used, at least one selected from the group consisting of styrene-butadiene rubber, butadiene rubber, and natural rubber is more preferably used, and at least styrene-butadiene rubber is still more preferably included.

A method of producing the diene rubber is not particularly limited, and examples thereof include emulsion polymerization, solution polymerization, radical polymerization, anionic polymerization, and cationic polymerization.

Examples of the natural rubber include natural rubber latex, technical grade rubber (TSR), smoked sheet (RSS), gutta-percha, *Eucommia ulmoides-*derived natural rubber, guayule-derived natural rubber, Russian dandelion-derived natural rubber, and plant component fermented rubber. Further, the natural rubber encompasses modified natural rubbers such as epoxidized natural rubber, methacrylic acid modified natural rubber, styrene modified natural rubber, sulfonic acid modified natural rubber, and zinc sulfonate modified natural rubber, obtained by modifying the natural rubbers.

The ratio of cis, trans, and vinyl of the double bonds of the natural rubber and the synthetic diene rubber is not particularly limited, and any ratio can be preferably used. Moreover, the number average molecular weight and molecular weight distribution of the diene rubber are not particularly limited, and it is preferable that the number average molecular weight is 500 to 3000000, and the molecular weight distribution is 1.5 to 15.

Besides the diene rubber, non-diene rubber may be blended as the rubber component. Known non-diene rubber can be widely used as the non-diene rubber. Specific examples thereof include: olefinic rubber such as ethylene/propylene rubber (EPM); chlorosulfonated polyethylene rubber (CSM); acrylic rubber (ACM); urethane rubber (U); silicone rubber (VMQ, PVMQ, FVMQ); fluorine rubber (FKM); and polysulfide rubber (T).

The rubber composition of the present invention can be blended with an elastomer, as well as the rubber component described above, as long as the function thereof is not degraded. Examples of the elastomer include thermoplastic elastomers selected from the group consisting of polystyrene-based elastomer polymers such as styrene-isoprene-styrene ternary block copolymer (SIS), styrene-butadiene-styrene ternary block copolymer (SBS), and hydrogenated substances thereof (SEBS, SEPS, SEEPS), polyolefin-based elastomers, polyvinyl chloride-based elastomers, polyurethane-based elastomers, polyester-based elastomers, and polyamide-based elastomers.

The content of the diene rubber in the rubber component is preferably 10% by mass or more, more preferably 30% by mass or more, and still more preferably 50% by mass or more with respect to the total amount of the rubber component. In particular, the total content of the aromatic vinyl-conjugated diene copolymer rubber and the conjugated diene (co)polymer rubber in the rubber component is preferably 70% by mass or more, more preferably 80% by mass or more, and still more preferably 90% by mass or more with respect to the total amount of the rubber component.

### (Additive for Rubber)

The additive for rubber, used in the rubber composition, includes the following sulfur-containing hydrocarbon polymer. The abrasion resistance of a tire produced using the obtained rubber composition is deteriorated in the case of blending the rubber component having a high glass transformation temperature described above with an additive that increases the glass transformation temperature of the rubber component, such as conventionally known petroleum resin. In contrast, in the present invention, the abrasion resistance of a tire produced using the obtained rubber composition can be improved by blending the rubber component having a high glass transformation temperature described above with the additive for rubber, including the following sulfur-containing hydrocarbon polymer. Therefore, the following sulfur-containing hydrocarbon polymer can be used as an agent for improving abrasion resistance of a tire.

### (Sulfur-Containing Hydrocarbon Polymer)

The sulfur-containing hydrocarbon polymer is a reaction product of sulfur and a polymer of an unsaturated hydrocarbon. Specifically, the sulfur-containing hydrocarbon polymer is preferably a reaction product obtained by allowing the unsaturated bond of a polymer of an unsaturated hydrocarbon to react with sulfur.

The weight-average molecular weight (Mw) of the sulfur-containing hydrocarbon polymer is 500 or more and 4000 or less, the lower limit value thereof is preferably 600 or more, more preferably 700 or more, and still more preferably 800 or more, and the upper limit value thereof is preferably 3000 or less, more preferably 2000 or less, and still more preferably 1500 or less. In particular, the weight-average molecular weight (Mw) of the sulfur-containing hydrocarbon polymer is preferably 600 or more and 3000 or less, more preferably 700 or more and 2000 or less, and still more preferably 800 or more and 1500 or less. A reduction in the weight-average molecular weight of the sulfur-containing hydrocarbon polymer can result in suppression of binding of sulfur-containing hydrocarbon polymers through sulfur, in an increase in the amount of sulfur bound to the rubber component, and in further improvement in abrasion resistance, wet grip property, and handling stability.

The molecular weight distribution of the sulfur-containing hydrocarbon polymer (Mw/number average molecular weight (Mn)) is preferably 1.0 or more and 5.0 or less, more preferably 1.0 or more and 4.0 or less, still more preferably 1.0 or more and 3.0 or less, and even more preferably 1.0 or more and 2.5 or less.

The weight-average molecular weight (Mw) and the molecular weight distribution (Mw/Mn) can be measured by a conventionally known GPC (gel permeation chromatography) analysis method.

In the present invention, at least a hydrocarbon having an unsaturated bond for reacting with sulfur is used as the raw material of a polymer. It is preferable that the unsaturated hydrocarbon includes an alicyclic unsaturated compound, and the alicyclic unsaturated hydrocarbon is preferably a compound having a norbornene skeleton. This is because the structure of the double bond of the norbornene skeleton has a strain, and has favorable reactivity with sulfur. The unsaturated bonds of the alicyclic unsaturated compound may remain after reaction with sulfur, or all the unsaturated bonds may be consumed. The unsaturated bonds of the alicyclic unsaturated compound are unsaturated bonds existing in a norbornene skeleton and unsaturated bonds existing in a cyclopentene skeleton, and all the unsaturated bonds of the norbornene skeleton are more preferably consumed from the viewpoint of improving the abrasion resistance of a tire.

In one embodiment of the present invention, a resin obtained by polymerizing the remaining fraction (hereinafter referred to as "petroleum resin"), obtained by removing useful compounds such as ethylene, propylene, and butadiene from a fraction obtained by thermally decomposing naphtha, while maintaining a mixed state can be used as the polymer of the unsaturated hydrocarbon from the viewpoint of industrial production. Common examples of the petroleum resin include: aliphatic petroleum resins (C5 petroleum resins) obtained by (co)polymerizing C5 fractions; aromatic petroleum resins (C9 petroleum resins) obtained by (co)polymerizing C9 fractions obtained by thermal decomposition of naphtha; and copolymer-based petroleum resins (C5/C9 petroleum resins) obtained by copolymerizing the C5 fractions and the C9 fractions. The petroleum resin is a transparent, pale yellow or yellowish-brown, rosin (pine-tree gum)-like resin having a molecular weight of 200 to 8000 and a softening point of 5 to 180°C although the properties of the generated resin differ according to the content of olefin in a raw material.

Among petroleum resins, a petroleum resin (hereinafter referred to as "alicyclic unsaturated hydrocarbon petroleum resin") obtained by (co)polymerizing a fraction including an alicyclic unsaturated hydrocarbon is used in the present invention. Examples of the alicyclic unsaturated hydrocarbon petroleum resin include a resin obtained by dimerizing a cyclopentadiene included in a C5 fraction to form a dicyclopentadiene, distilling the resultant to separate the dicyclopentadiene from the other C5 fractions, and heating and polymerizing the dicyclopentadiene by Diels-Alder reaction. Examples of the cyclopentadiene include cyclopentadiene and methylcyclopentadiene. Examples of the dicyclopentadiene include dicyclopentadiene (DCPD) and methyldicyclopentadiene, and dicyclopentadiene is particularly preferred.

The alicyclic unsaturated hydrocarbon petroleum resin may include C5 fractions and C9 fractions other than cyclopentadienes.

Fractions having a boiling point range of around 20 to 110°C among fractions obtained by thermal decomposition of petroleums are commonly used as the C5 fractions. Examples of C5 fractions other than cyclopentadienes include: olefinic hydrocarbons such as 1-pentene, 2-pentene, 2-methyl-1-butene, 2-methyl-2-butene, and 3-methyl-1-butene; and diolefinic hydrocarbons such as 2-methyl-1,3-butadiene, 1,2-pentadiene, 1,3-pentadiene, and 3-methyl-1,2-butadiene.

Fractions having a boiling point range of around 100 to 280°C among fractions obtained by thermal decomposition of petroleums are commonly used as the C9 fractions. Examples of the C9 fractions include: styrene homologues such as α-methylstyrene, β-methylstyrene, and γ-methylstyrene; and indene homologues such as indene and coumarone.

A method of producing common C5 petroleum resins, C9 petroleum resins, and C5/C9 petroleum resins is as follows. To raw oil, 0.01 to 5% by weight of Friedel-Crafts type catalyst is added, and subjected to polymerization reaction. After the reaction, the Friedel-Crafts type catalyst is decomposed and removed using an alkali, and unreacted oil and a low-molecular polymer are finally removed by distillation and/or the like. Common examples of the Friedel-Crafts type catalyst include aluminum trichloride, aluminum tribromide, boron trifluoride, and phenol complexes and butanol complexes thereof. Especially, aluminum trichloride, phenol complexes of boron trifluoride, and butanol complexes of boron trifluoride are preferred. Polymerization temperature is preferably 0 to 100°C, and particularly preferably 0 to 80°C. With regard to the amount of the catalyst, polymerization time is preferably 0.1 to 10 hours in a case in which the catalyst is 0.1 to 2.0 parts by mass with respect to 100 parts by mass of the raw oil. Reaction pressure is preferably atmospheric pressure to 1 MPa.

In the petroleum resin, a compound of which a part includes various functional groups may be polymerized. Examples of the functional groups include alcohol compounds and phenol compounds having hydroxyl groups. Specific examples of the alcohol compounds include alcohol compounds having double bonds, such as allyl alcohols and 2-butene-1,4-diol. Alkylphenols such as phenol, cresol, xylenol, p-t-butylphenol, p-octylphenol, and p-nonylphenol can be used as the phenol compounds. The compounds having hydroxyl groups may be used singly, or in combination of two or more kinds thereof.

The hydroxyl group-containing petroleum resin can also be produced by a method in which thermal polymerization of an alkyl (meth)acrylate ester or the like together with a petroleum fraction is performed to introduce an ester group into a petroleum resin, and the ester group is then reduced, or by a method in which a double bond remaining or being introduced into a petroleum resin is hydrated. In the present invention, hydroxyl group-containing petroleum resins obtained by such various methods as described above can be used as the hydroxyl group-containing petroleum resin, and it is preferable to use phenol-modified petroleum resins and the like from the viewpoint of performance and production.

The phenol-modified petroleum resin is obtained by cationic polymerization of a C9 fraction in the presence of a phenol, and is easily modified.

A polymerization method is not particularly limited, and can be selected from, for example, thermal polymerization reaction in which heating is performed at around 150 to 300°C for around 1 to 10 hours, such as the Diels-Alder reaction described above, the Friedel-Crafts type reaction described above, and the like.

These resins described above preferably have a softening point of 200°C or less (measurement method: ASTM E28-58-T), and it is desirable that the softening point is still more preferably 45 to 160°C.

In the present invention, a partially hydrogenated petroleum resin in which hydrogenation of a part of the double bond in the petroleum resin described above is performed can also be used. Although the conditions of the hydrogenation are optional, one or more solvents selected from saturated chain hydrocarbons, saturated alicyclic hydrocarbons, and aromatic hydrocarbons, of which the boiling point at ordinary pressure is 140 to 280°C, are mixed with a petroleum resin, and reaction is performed under conditions of a reaction temperature of 150 to 320°C, a reaction pressure of 3 to 30 MPa, and a reaction time of 1 to 10 hours using a common hydrogenated catalyst including nickel, molybdenum, cobalt, palladium, platinum, and/or the like.

Examples of commercially available products of C5, C9, and C5/C9 petroleum resins including double bonds in molecules include NEORESIN EP-140 (softening point: 140°C) manufactured by ENEOS Corporation, Marcalets M-890A (softening point: 105°C) manufactured by Maruzen Petrochemical Co., Ltd., Marcalets M-845A (softening point: 145°C) manufactured by Maruzen Petrochemical Co., Ltd., T-REZ RB093 (softening point: 92°C) manufactured by ENEOS Corporation, T-REZ RB100 (softening point: 98°C) manufactured by ENEOS Corporation, T-REZ RC093 (softening point: 93°C) manufactured by ENEOS Corporation, T-REZ RC100 (softening point: 97°C) manufactured by ENEOS Corporation, T-REZ RC115 (softening point: 112°C) manufactured by ENEOS Corporation, T-REZ RD104 (softening point: 102°C) manufactured by ENEOS Corporation, T-REZ PR802 (softening point: 89°C) manufactured by ENEOS Corporation, Quintone B170 (softening point: 70°C) manufactured by Zeon Corporation, Quintone M100 (softening point: 95°C) manufactured by Zeon Corporation, Quintone R100 (softening point: 96°C) manufactured by Zeon Corporation, Quintone A100 (softening point: 100°C) manufactured by Zeon Corporation, Quintone RX110 (softening point: 110°C) manufactured by Zeon Corporation, Escorez 1102 (softening point: 100°C) manufactured by Exxon Mobil Chemical, Escorez 1304 (softening point: 94°C) manufactured by Exxon Mobil Chemical, Escorez 1310LC (softening point: 100°C) manufactured by Exxon Mobil Chemical, Escorez 1315 (softening point: 115°C) manufactured by Exxon Mobil Chemical, HIKOREZ A-1100 (softening point: 98°C) manufactured by KOLON Indutries, HIKOREZ A-1115 (softening point: 112°C) manufactured by KOLON Indutries, HIKOREZ A-2115 (softening point: 112°C) manufactured by KOLON Indutries, and HIKOREZ C-1100 (softening point: 98°C) manufactured by KOLON Indutries.

### (Method of Producing Sulfur-Containing Hydrocarbon Polymer)

The sulfur-containing hydrocarbon polymer can be produced by allowing an unsaturated hydrocarbon to react with sulfur in a molten state while heating the unsaturated hydrocarbon in the absence of a solvent. A variation in molecular weight can be reduced while reducing the weight-average molecular weight of the sulfur-containing hydrocarbon polymer by performing heating reaction in the absence of solvent rather than in a solvent. The conditions of the heating reaction can be appropriately set without particular limitation, and are preferably 90 to 160°C, more preferably 100 to 150°C, still more preferably 100 to 140°C, and preferably a reaction time of 0.5 to 10 hours, more preferably 1 to 8 hours. The weight-average molecular weight of the sulfur-containing hydrocarbon polymer can be adjusted by adjusting the conditions of the heating reaction.

In accordance with the production method described above, side reaction can be suppressed, and therefore, the yield of the sulfur-containing hydrocarbon polymer is improved, and the composition for rubber can be blended with the sulfur-containing hydrocarbon polymer on an as-is basis without performing a purification step.

The amount of added sulfur with respect to the petroleum resin is not particularly limited, and is a rate of 0.1 equivalent or more, preferably 0.3 to 5 equivalents, per unsaturated bond (double bond) of an unsaturated hydrocarbon.

In the present invention, it is preferable to use a compound having a norbornene skeleton, particularly dicyclopentadiene, as the unsaturated alicyclic hydrocarbon. In addition, the double bond on the norbornene skeleton of dicyclopentadiene preferably reacts with sulfur, and only the double bond on the norbornene skeleton more preferably reacts with sulfur. The reaction of the double bond on the norbornene skeleton with sulfur and the consumption of the double bond can be confirmed by ¹H-NMR.

### (Filler)

Examples of the filler include silica, carbon black, and barium sulfate, at least one of silica and carbon black is preferably used, and silica is more preferably used.

### (Silica)

The silica is not particularly limited, and examples thereof include dry-process silica, wet-process silica, colloidal silica, and precipitated silica. Of these, wet-process silica containing hydrated silica as a main component is preferred. These silicas may be used singly, or in combination of two or more kinds thereof.

The specific surface area of the silica is not particularly limited, and the nitrogen adsorption-specific surface area (BET method) of the silica is usually in a range of 10 to 400 m²/g, preferably 20 to 300 m²/g, and still more preferably 120 to 190 m²/g. When the specific surface area of the silica is in the numerical range described above, mechanical characteristics and the like can be improved. The nitrogen adsorption-specific surface area is a value measured by the BET method in conformity with ASTM D3037-81.

### (Silane Coupling Agent)

It is preferable to blend a silane coupling agent in the case of blending silica. A known silane coupling agent can be used as the silane coupling agent. Examples thereof include bis[3-(triethoxysilyl)propyl]tetrasulfide, bis[3-(triethoxysilyl)propyl]disulfide, 3-octanoylthio-1-propyltriethoxysilane, and a homocondensate thereof, or a co-condensate with 3-mercaptopropyltriethoxysilane. Commercially available bis[3-(triethoxysilyl)propyl]tetrasulfide may be used, and examples thereof include Si-69 manufactured by Evonik Industries AG. Commercially available bis[3-(triethoxysilyl)propyl]disulfide may be used, and examples thereof include Si-75 manufactured by Evonik Industries AG. Commercially available 3-octanoylthio-1-propyltriethoxysilane may be used, and examples thereof include NXT-Silane manufactured by Momentive Performance Materials Inc. A commercially available condensate of 3-octanoylthio-1-propyltriethoxysilane may be used, and examples thereof include NXT-Z45 Silane manufactured by Momentive Performance Materials Inc. The content of the silane coupling agent is preferably 1 to 20% by mass, more preferably 2 to 10% by mass, of the amount of the silica.

### (Other Processing Aids)

The rubber composition of the present invention may include other processing aids such as vulcanizing agents, vulcanization accelerators, vulcanization acceleration aids, anti-aging agents, softeners, antioxidants, and coloring agents as long as the functions thereof are not degraded.

Examples of the vulcanizing agent include sulfur-based vulcanizing agents such as powdered sulfur, precipitated sulfur, highly dispersible sulfur, surface-treated sulfur, insoluble sulfur, dimorpholine disulfide, and alkylphenol disulfide, zinc oxide, magnesium oxide, litharge, p-quinonedioxime, p-dibenzoylquinonedioxime, tetrachloro-p-benzoquinone, poly-p-dinitrobenzene, methylenedianiline, phenol resin, brominated alkylphenol resin, and chlorinated alkylphenol resin. The content of the vulcanizing agent is preferably 0.1 to 10 parts by mass, more preferably 1 to 5 parts by mass, with respect to 100 parts by mass of the rubber component.

Examples of the vulcanization accelerator include: thiuram-based vulcanization accelerators such as tetramethylthiuram disulfide (TMTD), tetraethylthiuram disulfide (TETD), and tetramethylthiuram monosulfide (TMTM); aldehyde/ammonia-based vulcanization accelerators such as hexamethylenetetramine; guanidine-based vulcanization accelerators such as diphenylguanidine (DPG); thiazole-based vulcanization accelerators such as 2-mercaptobenzothiazole (MBT) and dibenzothiazyl disulfide (DM); sulfenamide-based vulcanization accelerators such as N-cyclohexyl-2-benzothiazylsulfenamide (CBS) and N-t-butyl-2-benzothiazylsulfenamide (BBS); and dithiocarbamate-based vulcanization accelerators such as zinc dimethyldithiocarbamate (ZnPDC). The content of the vulcanization accelerator is preferably 0.1 to 10 parts by mass, more preferably 1 to 5 parts by mass, with respect to 100 parts by mass of the rubber component.

Examples of the vulcanization acceleration aid include: fatty acids such as acetic acid, propionic acid, butanoic acid, stearic acid, acrylic acid, and maleic acid; fatty acid zincs such as zinc acetate, zinc propionate, zinc butyrate, zinc stearate, zinc acrylate, and zinc maleate, and fatty acid zinc salts which are salts thereof; and zinc oxides. The content of the vulcanization acceleration aid is preferably 0.1 to 10 parts by mass, more preferably 1 to 5 parts by mass, with respect to 100 parts by mass of the rubber component.

Examples of the anti-aging agent include aliphatic and aromatic compounds based on hindered amine, hindered phenol, and the like. The content of the anti-aging agent is preferably 0.1 to 10 parts by mass, more preferably 1 to 5 parts by mass, with respect to 100 parts by mass of the rubber component.

Examples of the antioxidant include butylated hydroxytoluene (BHT) and butylated hydroxyanisole (BHA). The content of the antioxidant is preferably 0.1 to 10 parts by mass, more preferably 1 to 5 parts by mass, with respect to 100 parts by mass of the rubber component.

A conventionally known softener can be used as the softener. The softener is not particularly limited, and examples thereof include: petroleum-based softeners such as aroma oil, paraffin oil, and naphthene oil; and plant-based softeners such as palm oil, castor oil, cotton seed cake oil, and soybean oil. For use, one of them may be appropriately selected and used singly, or two or more of them may be appropriately selected and used. In the case of containing the softener, it is preferable to contain a softener which is a liquid at ordinary temperature such as 25°C, for example, a petroleum-based softener such as, aroma oil, paraffin oil, or naphthene oil, and aroma oil is particularly preferred, among the softeners described above, from the viewpoint of easiness of handling. The content of the softener is preferably 10 to 200 parts by mass, more preferably 20 to 100 parts by mass, with respect to 100 parts by mass of the rubber component.

Examples of the coloring agent include: inorganic pigments such as titanium dioxide, zinc oxide, ultramarine blue, iron red, lithopone, lead, cadmium, iron, cobalt, aluminum, hydrochloride, and sulfate; azo pigments; and copper phthalocyanine pigments. The content of the coloring agent is preferably 0.1 to 10 parts by mass, more preferably 1 to 5 parts by mass, with respect to 100 parts by mass of the rubber component.

Such another processing aid is kneaded with the rubber component by a known kneading machine for rubber, for example, a roll, a Banbury mixer, a kneader, or the like, and vulcanized under optional conditions, and the resultant can be used as the rubber composition. The amount of the added other processing aid can be set at a conventional common content unless the objective of the present invention is impaired.

### [Method of Producing Rubber Composition]

A method of producing the rubber composition of the present invention includes at least a step of kneading the rubber component described above and the additive for rubber, described above. Preferably, the method of producing the rubber composition may further include a step of kneading the vulcanizing agent described above. More preferably, a step of kneading the vulcanizing agent and the vulcanization accelerator described above may be further included.

In the method of producing the rubber composition, the other processing aid described above can be appropriately blended and kneaded as long as the functions of the rubber composition are not degraded.

In the production of the rubber composition, a conventionally known kneading apparatus can be used, and kneading temperature, time, blending order, and the like can be appropriately selected.

### [Tire Product]

A tire product can be produced by a conventionally known method and common general technical knowledge widely known to those skilled in the art using the rubber composition of the present invention. Examples of the tire product include tires and other related members. For example, the rubber composition is extruded, then molded using a tire molding machine, and then heated and pressurized using a vulcanizer, whereby a crosslinking is formed, and a tire can be produced. The tire produced using the rubber composition of the present invention is excellent in abrasion resistance, wet grip property, and handling stability.

Applications of the tire are not particularly limited, and examples thereof include passenger tires, heavy load tires, tires for motorcycles (motorbikes), and studless tires. Of these, the tire can be preferably used for passenger tires. In particular, the tire can be preferably used for HPTs (high-performance tires), fuel-efficient tires, and all-season tires.

The shape, structure, size, and material of the tire are not particularly limited, and can be appropriately selected depending on a purpose. Moreover, the rubber composition of the present invention can be applied to each section of the tire. Sections to which the tire is applied are not particularly limited, and the treads, carcasses, side walls, inner liners, undertreads, belt sections, and the like of tires can be appropriately selected depending on a purpose.

### [Rubber Product]

Rubber products other than the tire product can also be produced using the rubber composition of the present invention. Examples of the rubber products other than the tire include rubber components for automobiles (exteriors, interiors, weather strips, boots, mounts, seals, sealers, and gaskets), hoses, belts, sheets, vibration-proof rubbers, rollers, linings, rubberized fabrics, sealants, gloves, fenders, medical rubbers (syringe gaskets, tubes, and catheters), gaskets (for household electric appliances and building), asphalt modifiers, grips, toys, shoes, sandals, keypads, gears, and PET bottle cap liners.

### EXAMPLES

The present invention is specifically described with reference to Examples and Comparative Examples. However, the present invention is not limited to these Examples.

### (Preparation Example 1)

### ·Synthesis of Sulfur-Containing Hydrocarbon Polymer A

In a 300-mL two-necked egg-type flask, 90 g of petroleum resin A (Mw: 810, Mw/Mn: 1.74, softening point of 85°C, iodine value (in conformity with JIS K0070): 185.0, polymer of DCPD-containing unsaturated hydrocarbon) was put, and heated to 130°C to achieve a molten state. Then, 8.7 g of sulfur was put in the flask, and stirred for 3 hours. After the completion of the reaction, the reactant was drained into an aluminum dish, and subjected to natural radiational cooling.

Then, ¹H-NMR analysis of the obtained reactant was performed, and the consumption of a double bond on a norbornene skeleton at around 5.8 ppm was confirmed. As a result of GPC analysis of the reactant, Mw was 1220, and Mw/Mn was 2.10. As a result of elemental analysis, it was confirmed that the amount of sulfur was 8.9% by mass, and 3.01 sulfur molecules per the amount of the double bond on the norbornene skeleton was introduced.

### (Preparation Example 2)

### ·Synthesis of Sulfur-Containing Hydrocarbon Polymer B

Reaction was performed in a manner similar to that in the synthesis of the sulfur-containing hydrocarbon polymer A described above except that the heating temperature was changed to 120°C, and the stirring time was changed to 1 hour.

Then, ¹H-NMR analysis of the obtained reactant was performed, and the consumption of a double bond on a norbornene skeleton at around 5.8 ppm was confirmed. As a result of GPC analysis of the reactant, Mw was 816, and Mw/Mn was 1.73. On the basis of elemental analysis, it was confirmed that the amount of sulfur was 9.0% by mass, and 3.04 sulfur molecules per the amount of the double bond on the norbornene skeleton was introduced.

### (Preparation Example 3)

### ·Synthesis of Sulfur-Containing Hydrocarbon Polymer C

Reaction was performed in a manner similar to that in the synthesis of the sulfur-containing hydrocarbon polymer A described above except that the heating temperature was changed to 120°C, and the stirring time was changed to 6 hours.

Then, ¹H-NMR analysis of the obtained reactant was performed, and the consumption of a double bond on a norbornene skeleton at around 5.8 ppm was confirmed. As a result of GPC analysis of the reactant, Mw was 1011, and Mw/Mn was 1.90. On the basis of elemental analysis, it was confirmed that the amount of sulfur was 8.9% by mass, and 3.01 sulfur molecules per the amount of the double bond on the norbornene skeleton was introduced.

### (Preparation Example 4)

### ·Synthesis of Sulfur-Containing Hydrocarbon Polymer D

Reaction was performed in a manner similar to that in the synthesis of the sulfur-containing hydrocarbon polymer A described above except that the stirring time was changed to 5 hours.

Then, ¹H-NMR analysis of the obtained reactant was performed, and the consumption of a double bond on a norbornene skeleton at around 5.8 ppm was confirmed. As a result of GPC analysis of the reactant, Mw was 1458, and Mw/Mn was 2.32. On the basis of elemental analysis, it was confirmed that the amount of sulfur was 8.9% by mass, and 3.01 sulfur molecules per the amount of the double bond on the norbornene skeleton was introduced.

### (Preparation Example 5)

### ·Synthesis of Hydrocarbon Polymer E

C5 and C9 fractions obtained from a naphtha cracker were used as raw material monomers, and subjected to a polymerization step with an acid catalyst, a step of neutralizing a remaining catalyst, and a step of removing a light component, to obtain a petroleum resin having an aromatic content of 12%, a softening point of 90°C, and Mw of 1300.

### [Example 1]

Each of the following components was kneaded using a 250-mL kneader (Labo Plastomill manufactured by Toyo Seiki Seisaku-sho, Ltd.) to obtain a rubber composition. The details of a kneading operation that was carried out are as in the following (i) to (iii).
(i) Mixer kneading: Rubber components were put into a closed pressurization kneader heated to 130°C, and masticated at 30 rpm for 1 minute, a measured 1/2 amount of the mixture of silica, zinc oxide, stearic acid, and an anti-aging agent, a total amount of a silane coupling agent 1, and a total amount of the sulfur-containing hydrocarbon polymer A were then put into the closed pressurization kneader, and kneading was performed for 1 minute 30 seconds at a rotation number increased to 50 rpm. The remaining 1/2 amount of the mixture of the silica, the zinc oxide, the stearic acid, and the anti-aging agent was further added, kneaded for 5 minutes 30 seconds, and released.
(ii) Remilling: In order to improve the dispersion of silica, the kneaded product which was released into the closed pressurization kneader heated to 120°C and of which the temperature was sufficiently decreased was further kneaded at 50 rpm for 2 minutes, and then released.
(iii) Roll kneading (addition of vulcanizing system): After a sufficient decrease in temperature due to the releasing, sulfur, a vulcanization accelerator, and the like are added to the kneaded product described above with two rolls, and kneaded to obtain a rubber composition.
   ·Rubber (SBR (A), Tg: -27°C) 100 parts by mass
   ·Silica AQ (trade name: Nipsil AQ, manufactured by TOSOH SILICA CORPORATION) 70 parts by mass
   ·Zinc oxide No. 3 (trade name: Ginrei R, manufactured by Toho Zinc Co., Ltd.) 3 parts by mass
   ·Stearic acid (trade name: Stearic Acid 300, manufactured by New Japan Chemical Co., Ltd.) 1 part by mass
   ·Anti-aging agent (trade name: NOCRAC 6C, manufactured by OUCHI SHINKO CHEMICAL INDUSTRIAL CO., LTD.) 1 part by mass
   ·Silane coupling agent 1 (trade name: Si69, manufactured by Evonik Industries AG) 5.6 parts by mass
   ·Sulfur-containing hydrocarbon polymer A 15 parts by mass
   ·Sulfur (5% oil-treated sulfur, manufactured by Hosoi Chemical Industry Co., Ltd) 1 part by mass
   ·Vulcanization accelerator (trade name: NOCCELER CZ, manufactured by OUCHI SHINKO CHEMICAL INDUSTRIAL CO., LTD.) 2.3 parts by mass
   ·Vulcanization accelerator (trade name: NOCCELER D, manufactured by OUCHI SHINKO CHEMICAL INDUSTRIAL CO., LTD.) 1 part by mass

### [Comparative Example 1]

A rubber composition was obtained in a manner similar to that in Example 1 except that 15 parts by mass of the hydrocarbon polymer E (excluding sulfur) was added instead of the sulfur-containing hydrocarbon polymer A, and the amount of added sulfur was changed to 1.5 parts by mass.

### [Example 2]

A rubber composition was obtained in a manner similar to that in Example 1 except that 5.6 parts by mass of a silane coupling agent 2 (trade name: Si-75, manufactured by Evonik Industries AG) was added instead of the silane coupling agent 1 (Si69).

### [Example 3]

A rubber composition was obtained in a manner similar to that in Example 1 except that 5.6 parts by mass of a silane coupling agent 3 (trade name: Si-363, manufactured by Evonik Industries AG) was added instead of the silane coupling agent 1 (Si69).

### [Example 4]

A rubber composition was obtained in a manner similar to that in Example 1 except that 5.6 parts by mass of a silane coupling agent 4 (trade name: NXT-Silane, manufactured by Momentive Performance Materials Inc.) was added instead of the silane coupling agent 1 (Si69).

### [Example 5]

A rubber composition was obtained in a manner similar to that in Example 1 except that 5.6 parts by mass of a silane coupling agent 5 (trade name: NXT-Z45 Silane, manufactured by Momentive Performance Materials Inc.) was added instead of the silane coupling agent 1 (Si69).

### [Example 6]

A rubber composition was obtained in a manner similar to that in Example 1 except that the amount of added silica was changed to 40 parts by mass.

### [Comparative Example 2]

A rubber composition was obtained in a manner similar to that in Example 6 except that 15 parts by mass of the hydrocarbon polymer E was added instead of the sulfur-containing hydrocarbon polymer A, and the amount of added sulfur was changed to 1.5 parts by mass.

### [Example 7]

A rubber composition was obtained in a manner similar to that in Example 1 except that the amount of added silica was changed to 150 parts by mass.

### [Comparative Example 3]

A rubber composition was obtained in a manner similar to that in Example 7 except that 15 parts by mass of the hydrocarbon polymer E was added instead of the sulfur-containing hydrocarbon polymer A, and the amount of added sulfur was changed to 1.5 parts by mass.

### [Example 8]

A rubber composition was obtained in a similar manner that in Example 1 except that the amount of added SBR (A) (Tg: -27°C) as a rubber component was changed to 70 parts by mass, and 30 parts by mass of BR (Tg: -100°C) was added.

### [Comparative Example 4]

A rubber composition was obtained in a manner similar to that in Example 8 except that 15 parts by mass of the hydrocarbon polymer E was added instead of the sulfur-containing hydrocarbon polymer A, and the amount of added sulfur was changed to 1.5 parts by mass.

### [Example 9]

A rubber composition was obtained in a similar manner that in Example 1 except that the amount of added SBR (A) (Tg: -27°C) as a rubber component was changed to 60 parts by mass, and 20 parts by mass of BR (Tg: -100°C) and 20 parts by mass of NR (Tg: -79°C) were added.

### [Comparative Example 5]

A rubber composition was obtained in a manner similar to that in Example 9 except that 15 parts by mass of the hydrocarbon polymer E was added instead of the sulfur-containing hydrocarbon polymer A, and the amount of added sulfur was changed to 1.5 parts by mass.

### [Example 10]

A rubber composition was obtained in a similar manner that in Example 1 except that the amount of added SBR (A) (Tg: -27°C) as a rubber component was changed to 60 parts by mass, and 40 parts by mass of BR (Tg: -100°C) was added.

### [Comparative Example 6]

A rubber composition was obtained in a manner similar to that in Example 10 except that 15 parts by mass of the hydrocarbon polymer E was added instead of the sulfur-containing hydrocarbon polymer A, and the amount of added sulfur was changed to 1.5 parts by mass.

### [Comparative Example 7]

A rubber composition was obtained in a similar manner that in Comparative Example 1 except that 100 parts by mass of SBR (B) (Tg: - 64°C) was added instead of SBR (A) as a rubber component.

### [Comparative Example 8]

A rubber composition was obtained in a manner similar to that in Comparative Example 7 except that 15 parts by mass of the sulfur-containing hydrocarbon polymer A was added instead of the hydrocarbon polymer E, and the amount of added sulfur was changed to 1 part by mass.

### [Comparative Example 9]

A rubber composition was obtained in a manner similar to that in Comparative Example 1 except that 100 parts by mass of NR (Tg: -79°C) was added as a rubber component instead of SBR (A), the amount of added sulfur was changed to 2.5 parts by mass, the amount of added vulcanization accelerator (NOCCELER CZ) was changed to 2 parts by mass, and the amount of added vulcanization accelerator (NOCCELER D) was changed to 1.5 parts by mass.

### [Comparative Example 10]

A rubber composition was obtained in a manner similar to that in Comparative Example 9 except that 15 parts by mass of the sulfur-containing hydrocarbon polymer A was added instead of the hydrocarbon polymer E, and the amount of added sulfur was changed to 2 parts by mass.

### [Evaluation of Physical Properties]

The following measurement was performed using the rubber compositions obtained in Examples 1 to 10 and Comparative Examples 1 to 10. Tg of each rubber component is a value measured using a differential scanning calorimetric measurement apparatus (DSC, model number: DSC7000X, manufactured by Hitachi High-Tech Science Corporation) under conditions of a sample amount of about 10 mg, a circulation condition of 40 mL/min of nitrogen gas, and a temperature-raising rate of 20°C/min.

### (Tensile Strength)

In a die (150 mm × 150 mm × 1 mm), 42 g of each rubber composition was put, and heated and pressurized for 40 minutes under conditions of 160°C and 20 MPa, to obtain a rubber sheet having a thickness of 1 mm (thickness of 1 mm, height of 150 mm, and width of 150 mm). A No. 3 dumbbell-shaped test piece was stamped from each rubber sheet, and subjected to a tensile test at a tension speed of 500 mm/min according to JIS K6251 (published in 2010), and a 100% modulus [MPa] was measured at room temperature (25°C). In each Example and each Comparative Example, the values of 100% moduli which were indicators for the crosslink densities of the respective rubber sheets were adjusted to be values closely approximating each other, and other physical properties were then confirmed.

### (Abrasion Amount)

Molding of 15 g of each rubber composition was performed to form a disc-shaped sample having a diameter of 16.0 mm and a thickness of 8 mm. Then, an abrasion resistance test was conducted using a DIN abrasion tester (rotation cylindrical type abrasion tester: trade name "DIN Abrasion Tester" manufactured by YASUDA SEIKI SEISAKUSHO, LTD.) using each of the obtained disc-shaped samples under conditions of temperature: room temperature (25°C), load: 2.5 N, drum rotation speed: 40 rpm, and sample traversing speed: 2.8 mm/sec according to JIS K6264-2 (published in 2005) to measure an abrasion amount (volumetric basis: rate (% by volume) of volume of abrasion due to test with respect to total volume prior to abrasion). A smaller abrasion amounts set exhibits superior abrasion resistance.

### (Hardness)

The type A rubber hardness, prescribed in ISO at a temperature 25°C, of each rubber sheet obtained in the above was measured using a durometer (model number: GS-610, manufactured by Toyo Seiki Seisaku-sho, Ltd.) according to JIS K6253. The higher hardness means that the rubber sheet is harder. In each Example and each Comparative Example, the hardnesses of the respective rubber sheets were adjusted to be values closely approximating each other, and other physical properties were then confirmed.

### (Wet Grip Property)

According to JIS K 6394, the tan δ of each rubber sheet obtained in the above at a measurement temperature of 0°C was measured using a viscoelasticity measurement apparatus (REOGEL E-4000 manufactured by UBM) in a tension mode under conditions of a strain of about 0.1% and a frequency of 10 Hz. The higher value of the tan δ (0°C) exhibits superior wet grip property.

### (Elastic Modulus)

According to JIS K6394: 2007, E' (30°C) of each rubber sheet obtained in the above was measured under a condition of a temperature of 30°C using a viscoelasticity measurement apparatus (REOGEL E-4000 manufactured by UBM) in a tension mode under conditions of a strain of about 0.1% and a frequency of 10 Hz. The higher value of E' (30°C) exhibits superior handling stability.

The above measurement results are set forth in Tables 1 and 2. Each result of the abrasion resistance, the wet grip property, and the handling stability was described as a relative value in Examples 1 to 5 in a case in which each value in Comparative Example 1 was set at 100, described as a relative value in Example 6 in a case in which each value in Comparative Example 2 was set at 100, described as a relative value in Example 7 in a case in which each value in Comparative Example 3 was set at 100, described as a relative value in Example 8 in a case in which each value in Comparative Example 4 was set at 100, described as a relative value in Example 9 in a case in which each value in Comparative Example 5 was set at 100, described as a relative value in Example 10 in a case in which each value in Comparative Example 6 was set at 100, described as a relative value in Comparative Example 8 in a case in which each value in Comparative Example 7 was set at 100, and described as a relative value in Comparative Example 10 in a case in which each value in Comparative Example 9 was set at 100.

**[Table 1]**

| | | | Co. Ex.1 | Ex.1 | Ex.2 | Ex.3 | Ex.4 | Ex.5 | Co. Ex.2 | Ex. 6 | Co. Ex. 3 | Ex.7 |
|---|---|---|---|---|---|---|---|---|---|---|---|---|
| Composition of rubber compositions (part(s) by mass) | Rubber components | SBR (A) | 100 | 100 | 100 | 100 | 100 | 100 | 100 | 100 | 100 | 100 |
| | | SBR (B) | 0 | 0 | 0 | 0 | 0 | 0 | 0 | 0 | 0 | 0 |
| | | BR | 0 | 0 | 0 | 0 | 0 | 0 | 0 | 0 | 0 | 0 |
| | | NR | 0 | 0 | 0 | 0 | 0 | 0 | 0 | 0 | 0 | 0 |
| | Silica | | 70 | 70 | 70 | 70 | 70 | 70 | 40 | 40 | 150 | 150 |
| | Zinc oxide | | 3 | 3 | 3 | 3 | 3 | 3 | 3 | 3 | 3 | 3 |
| | Stearic acid | | 1 | 1 | 1 | 1 | 1 | 1 | 1 | 1 | 1 | 1 |
| | Anti-aging agent (NOCRAC 6C) | | 1 | 1 | 1 | 1 | 1 | 1 | 1 | 1 | 1 | 1 |
| | Silane coupling agent 1 (Si69) | | 5.6 | 5.6 | 0 | 0 | 0 | 0 | 5.6 | 5.6 | 5.6 | 5.6 |
| | Silane coupling agent 2 (Si75) | | 0 | 0 | 5.6 | 0 | 0 | 0 | 0 | 0 | 0 | 0 |
| | Silane coupling agent 3 (Si363) | | 0 | 0 | 0 | 5.6 | 0 | 0 | 0 | 0 | 0 | 0 |
| | Silane coupling agent 4 (NXT-Silane) | | 0 | 0 | 0 | 0 | 5.6 | 0 | 0 | 0 | 0 | 0 |
| | Silane coupling agent 5 (NXT-Z45 Silane) | | 0 | 0 | 0 | 0 | 0 | 5.6 | 0 | 0 | 0 | 0 |
| | Additive for rubber | Sulfur-containing hydrocarbon polymer A | 0 | 15 | 15 | 15 | 15 | 15 | 0 | 15 | 0 | 15 |
| | | Hydrocarbon polymer E | 15 | 0 | 0 | 0 | 0 | 0 | 15 | 0 | 15 | 0 |
| | Vulcanizing agent (sulfur) | | 1.5 | 1 | 1 | 1 | 1 | 1 | 1.5 | 1 | 1.5 | 1 |
| | Vulcanization accelerator (NOCCELER CZ) | | 2.3 | 2.3 | 2.3 | 2.3 | 2.3 | 2.3 | 2.3 | 2.3 | 2.3 | 2.3 |
| | Vulcanization accelerator (NOCCELER D) | | 1 | 1 | 1 | 1 | 1 | 1 | 1 | 1 | 1 | 1 |
| Evaluation | Tg (°C) of rubber component | | -27 | -27 | -27 | -27 | -27 | -27 | -27 | -27 | -27 | -27 |
| | 100% modulus (MPa) | | 2.2 | 2.3 | 2.2 | 2.1 | 2.2 | 2.1 | 1.9 | 2.0 | 2.5 | 2.5 |
| | Abrasion amount (%) | | 5.3 | 4.3 | 4.2 | 4.2 | 4.3 | 4.5 | 5.1 | 4.2 | 5.8 | 4.3 |
| | Abrasion resistance (index (%)) | | 100 | 80 | 78 | 78 | 80 | 83 | 100 | 82 | 100 | 74 |
| | Hardness | | 61 | 62 | 63 | 62 | 61 | 62 | 58 | 59 | 63 | 65 |
| | Wet grip property (tan δ at 0°C) (index (%)) | | 100 | 112 | 113 | 116 | 108 | 112 | 100 | 115 | 100 | 114 |
| | Elastic modulus (E' at 30°C) (index (%)) | | 100 | 116 | 113 | 115 | 111 | 112 | 100 | 111 | 100 | 113 |

**[Table 2]**

| | | | Co. Ex.4 | Ex.8 | Co. Ex.5 | Ex.9 | Co. Ex.6 | Ex. 10 | Co. Ex.7 | Co. Ex.8 | Co. Ex.9 | Co. Ex. 10 |
|---|---|---|---|---|---|---|---|---|---|---|---|---|
| Composition of rubber compositions (part(s) by mass) | Rubber components | SBR (A) | 70 | 70 | 60 | 60 | 60 | 60 | 0 | 0 | 0 | 0 |
| | | SBR (B) | 0 | 0 | 0 | 0 | 0 | 0 | 90 | 90 | 0 | 0 |
| | | BR | 30 | 30 | 20 | 20 | 40 | 40 | 10 | 10 | 0 | 0 |
| | | NR | 0 | 0 | 20 | 20 | 0 | 0 | 0 | 0 | 100 | 100 |
| | Silica | | 70 | 70 | 70 | 70 | 70 | 70 | 70 | 70 | 70 | 70 |
| | Zinc oxide | | 3 | 3 | 3 | 3 | 3 | 3 | 3 | 3 | 3 | 3 |
| | Stearic acid | | 1 | 1 | 1 | 1 | 1 | 1 | 1 | 1 | 1 | 1 |
| | Anti-aging agent (NOCRAC 6C) | | 1 | 1 | 1 | 1 | 1 | 1 | 1 | 1 | 1 | 1 |
| | Silane coupling agent 1 (Si69) | | 5.6 | 5.6 | 5.6 | 5.6 | 5.6 | 5.6 | 5.6 | 5.6 | 5.6 | 5.6 |
| | Additive for rubber | Sulfur-containing hydrocarbon polymer A | 0 | 15 | 0 | 15 | 0 | 15 | 0 | 15 | 0 | 15 |
| | | Hydrocarbon polymer E | 15 | 0 | 15 | 0 | 15 | 0 | 15 | 0 | 15 | 0 |
| | Vulcanizing agent (sulfur) | | 1.5 | 1 | 1.5 | 1 | 1.5 | 1 | 1.5 | 1 | 2.5 | 2 |
| | Vulcanization accelerator (NOCCELER CZ) | | 2.3 | 2.3 | 2.3 | 2.3 | 2.3 | 2.3 | 2.3 | 2.3 | 2 | 2 |
| | Vulcanization accelerator (NOCCELER D) | | 1 | 1 | 1 | 1 | 1 | 1 | 1 | 1 | 1.5 | 1.5 |
| Evaluation | Tg (°C) of rubber component | | -49 | -49 | -50 | -50 | -56 | -56 | -64 | -64 | -70 | -70 |
| | 100% modulus (MPa) | | 2.0 | 2.1 | 2.1 | 2.2 | 1.9 | 2.1 | 1.8 | 1.9 | 2.7 | 2.8 |
| | Abrasion amount (%) | | 5.2 | 4.3 | 4.6 | 4.3 | 5.1 | 4.2 | 4.4 | 4.5 | 4.8 | 4.7 |
| | Abrasion resistance (index (%)) | | 100 | 83 | 100 | 93 | 100 | 82 | 100 | 101 | 100 | 99 |
| | Hardness | | 63 | 63 | 61 | 61 | 61 | 60 | 60 | 59 | 55 | 56 |
| | Wet grip property (tan δ at 0°C) (index (%)) | | 100 | 111 | 100 | 109 | 100 | 105 | 100 | 100 | 100 | 113 |
| | Elastic modulus (E' at 30°C) (index (%)) | | 100 | 120 | 100 | 105 | 100 | 110 | 100 | 98 | 100 | 94 |

Based on the results of Examples 1 to 5 and Comparative Example 1, the results of Example 6 and Comparative Example 2, and the results of Example 7 and Comparative Example 3, the abrasion resistance, wet grip property, and handling stability of the rubber sheet obtained by adding the sulfur-containing hydrocarbon polymer A instead of the hydrocarbon polymer E containing no sulfur to the rubber component having a glass transformation temperature of -27°C were very excellent.

Based on the results of Example 8 and Comparative Example 4, the abrasion resistance, wet grip property, and handling stability of the rubber sheet obtained by adding the sulfur-containing hydrocarbon polymer A instead of the hydrocarbon polymer E containing no sulfur to the rubber component having a glass transformation temperature of -49°C were very excellent.

Based on the results of Example 9 and Comparative Example 5, the abrasion resistance, wet grip property, and handling stability of the rubber sheet obtained by adding the sulfur-containing hydrocarbon polymer A instead of the hydrocarbon polymer E containing no sulfur to the rubber component having a glass transformation temperature of -50°C were excellent.

Based on the results of Example 10 and Comparative Example 6, the abrasion resistance, wet grip property, and handling stability of the rubber sheet obtained by adding the sulfur-containing hydrocarbon polymer A instead of the hydrocarbon polymer E containing no sulfur to the rubber component having a glass transformation temperature of -56°C were excellent.

Based on the results of Comparative Example 7 and Comparative Example 8, the abrasion resistance, wet grip property, and handling stability of the rubber sheet obtained by adding the sulfur-containing hydrocarbon polymer A instead of the hydrocarbon polymer E containing no sulfur to the rubber component having a glass transformation temperature of -64°C were not improved.

Based on the results of Comparative Example 9 and Comparative Example 10, the abrasion resistance, wet grip property, and handling stability of the rubber sheet obtained by adding the sulfur-containing hydrocarbon polymer A instead of the hydrocarbon polymer E containing no sulfur to the rubber component having a glass transformation temperature of -70°C were not improved.

Thus, it was revealed that a tire excellent in abrasion resistance, wet grip property, and handling stability can be produced by using the rubber composition of the present invention.

### (Example 11)

A rubber composition was obtained in a manner similar to that in Example 8 except that 15 parts by mass of the sulfur-containing hydrocarbon polymer B was added instead of the sulfur-containing hydrocarbon polymer A.

### (Example 12)

A rubber composition was obtained in a manner similar to that in Example 8 except that 15 parts by mass of the sulfur-containing hydrocarbon polymer C was added instead of the sulfur-containing hydrocarbon polymer A.

### (Example 13)

A rubber composition was obtained in a manner similar to that in Example 8 except that 15 parts by mass of the sulfur-containing hydrocarbon polymer D was added instead of the sulfur-containing hydrocarbon polymer A.

### [Evaluation of Physical Properties]

Tensile strengths and abrasion amounts were measured using the rubber compositions obtained in Examples 11 to 13 in a manner similar to the manner described above. The measurement results are set forth in Table 3. Each result of the abrasion resistance, the wet grip property, and the handling stability was described as a relative value in Examples 11 to 13 in a case in which each value in Comparative Example 4 was set at 100.

Based on the results of Examples 11 to 13 and Comparative Example 4, the abrasion resistance, wet grip property, and handling stability of the rubber sheets obtained by adding the sulfur-containing hydrocarbon polymers B to D instead of the hydrocarbon polymer E containing no sulfur to the rubber component having a glass transformation temperature of -49°C were very excellent.

**[Table 3]**

| | | | Co. Ex.4 | Ex.11 | Ex.12 | Ex.13 |
|---|---|---|---|---|---|---|
| Composition of rubber compositions (part(s) by mass) | Rubber components | SBR (A) | 70 | 70 | 70 | 70 |
| | | SBR (B) | 0 | 0 | 0 | 0 |
| | | BR | 30 | 30 | 30 | 30 |
| | | NR | 0 | 0 | 0 | 0 |
| | Silica | | 70 | 70 | 70 | 70 |
| | Zinc oxide | | 3 | 3 | 3 | 3 |
| | Stearic acid | | 1 | 1 | 1 | 1 |
| | Anti-aging agent (NOCRAC 6C) | | 1 | 1 | 1 | 1 |
| | Silane coupling agent 1 (Si69) | | 5.6 | 5.6 | 5.6 | 5.6 |
| | Additive for rubber | Sulfur-containing hydrocarbon polymer B | 0 | 15 | 0 | 0 |
| | | Sulfur-containing hydrocarbon polymer C | 0 | 0 | 15 | 0 |
| | | Sulfur-containing hydrocarbon polymer D | 0 | 0 | 0 | 15 |
| | | Hydrocarbon polymer E | 15 | 0 | 0 | 0 |
| | Vulcanizing agent (sulfur) | | 1.5 | 1 | 1 | 1 |
| | Vulcanization accelerator (NOCCELER CZ) | | 2.3 | 2.3 | 2.3 | 2.3 |
| | Vulcanization accelerator (NOCCELER D) | | 1 | 1 | 1 | 1 |
| Evaluation | Tg (°C) of rubber component | | -49 | -49 | -49 | -49 |
| | 100% modulus (MPa) | | 2.0 | 2.1 | 1.9 | 2.0 |
| | Abrasion amount (%) | | 5.2 | 4.6 | 4.8 | 4.8 |
| | Abrasion resistance (index (%)) | | 100 | 88 | 92 | 92 |
| | Hardness | | 63 | 63 | 64 | 64 |
| | Wet grip property (tan δ at 0°C) (index (%)) | | 100 | 109 | 107 | 109 |
| | Elastic modulus (E' at 30°C) (index (%)) | | 100 | 120 | 118 | 121 |

## Claims

1. A rubber composition comprising:
a rubber component having a glass transformation temperature of -60°C or more; and
an additive for rubber, comprising a sulfur-containing hydrocarbon polymer, wherein
the sulfur-containing hydrocarbon polymer is a reaction product of sulfur and a polymer of an unsaturated hydrocarbon, and the unsaturated hydrocarbon comprises an alicyclic unsaturated compound, and
the sulfur-containing hydrocarbon polymer has a weight-average molecular weight of 500 or more and 4000 or less.

2. The rubber composition according to claim 1, wherein the alicyclic unsaturated hydrocarbon comprises a compound comprising a norbornene skeleton.

3. The rubber composition according to claim 2, wherein the compound comprising the norbornene skeleton comprises dicyclopentadiene.

4. The rubber composition according to claim 2, wherein the rubber composition is formed by reaction of an unsaturated bond in the norbornene skeleton with sulfur.

5. The rubber composition according to claim 1, wherein the rubber component has a glass transformation temperature of -50°C or more and -10°C or less.

6. The rubber composition according to claim 1, wherein the sulfur-containing hydrocarbon polymer has a weight-average molecular weight of 700 or more and 2000 or less.

7. The rubber composition according to claim 1, wherein the rubber component comprises at least one selected from a group consisting of aromatic vinyl-conjugated diene copolymer rubbers and conjugated diene (co)polymer rubbers.

8. The rubber composition according to claim 1, wherein the rubber component comprises at least one selected from a group consisting of styrene-butadiene rubber, butadiene rubber, natural rubber, and isoprene rubber.

9. The rubber composition according to claim 1, further comprising a filler.

10. The rubber composition according to claim 9, wherein the filler comprises at least one selected from a group consisting of silica and carbon black.

11. The rubber composition according to claim 9, wherein a content of the filler is 10 parts by mass or more and less than 200 parts by mass with respect to 100 parts by mass of the rubber component.

12. The rubber composition according to any one of claims 1 to 11, wherein the additive for rubber is an agent for improving abrasion resistance of a tire.

13. The rubber composition according to any one of claims 1 to 11, for use in a tire product.

14. A method of producing a rubber composition, comprising a step of kneading at least a rubber component and an additive for rubber, wherein
the rubber component has a glass transformation temperature of - 60°C or more,
the additive for rubber comprises a sulfur-containing hydrocarbon polymer,
the sulfur-containing hydrocarbon polymer is a reaction product of sulfur and a polymer of an unsaturated hydrocarbon, and the unsaturated hydrocarbon comprises an alicyclic unsaturated compound, and
the sulfur-containing hydrocarbon polymer has a weight-average molecular weight of 500 or more and 4000 or less.

15. A tire product produced using the rubber composition according to any one of claims 1 to 11.
